# FASCICULE DE BREVET EUROPEEN

(11) **EP 2 790 960 B1**
(45) Date de publication et mention de la délivrance du brevet: **18.11.2020**
(21) Numéro de dépôt: 12805997.9
(22) Date de dépôt: 06.12.2012
(51) Int. Cl.: B60N 2/30

(54) **SIEGE ESCAMOTABLE POUR UN VEHICULE AUTOMOBILE**
EINZIEHBARER SITZ FÜR EIN KRAFTFAHRZEUG
RETRACTABLE SEAT FOR A MOTOR VEHICLE

(30) Priorité: 16.12.2011 FR 1161756
(43) Date de publication de la demande: 22.10.2014
(73) Titulaire: PSA Automobiles SA, 78300 Poissy (FR); Grupo Antolin-Ingenieria SA, 09007 Burgos (ES)
(72) Inventeur: THIEL, Marc, 25400 Exincourt (FR); DECOMBE, François, 42290 Sorbiers (FR); COMBEAU, Frédéric, 25750 Desandans (FR)
(86) Numéro de dépôt international: PCT/EP2012/074673
(87) Numéro de publication internationale: WO 2013/087513

(56) Documents cités:
- WO-A1-83/00665
- FR-A1- 2 898 837
- JP-A- 9 104 271
- US-A- 3 011 822
- US-A1- 2005 236 882

## Description

La présente invention revendique la priorité de la demande française 1161756 déposée le 16 décembre : 2011.

La présente invention concerne un siège escamotable pour un véhicule automobile.

Certains véhicules possèdent un habitacle modulable. Ils sont pour cela équipés de sièges escamotables qui permettent de disposer l'habitacle du véhicule dans une configuration dans laquelle les sièges sont déployés et peuvent accueillir des passagers ou dans une configuration dans laquelle les sièges sont rabattus en créant un plancher plat qui peut accueillir des objets pour en assurer le transport.

L'architecture classique d'un habitacle de véhicule peut prévoir en arrière des sièges de rang 2 ou de rang 3 lorsque le véhicule en est pourvu, la présence d'une espace formé dans la plancher dit cave à pied.

Cette espace ou cave à pied peut être fermé par un volet mobile. Ce volet est embarqué sur le dossier d'un siège et peut occuper une position inactive dans laquelle il est plaqué contre le dossier et une position active dans laquelle il vient fermer cet espace de manière à créer un plancher horizontal sur lequel il est possible de poser des objets.

Le volet est traditionnellement une plaque généralement recouverte d'une moquette qui est fixée par une articulation transversale de manière à autoriser son pivotement par rapport au dossier du siège.

Dans le cas d'un siège classique, un problème se pose dans la mesure où le siège est escamotable de sorte que, lorsque le siège est dans sa position déployée, le point de pivot du volet mobile se trouve à une première hauteur par rapport à la structure du véhicule, tandis que, lorsque le siège est escamoté, le point de pivot du plancher mobile se trouve à une seconde hauteur par rapport à la structure du véhicule.

Il apparaît donc qu'un inconvénient important d'un tel siège est que, lorsque le siège est en position déployée, le plancher mobile peut être horizontal, tandis que, lorsque le siège est en position escamotée, le plancher mobile se trouve alors dans une orientation qui n'est pas horizontale, ce qui peut être préjudiciable à l'utilisation du véhicule pour le chargement et le transport d'objets.

En d'autres termes, dans un siège escamotable classique pourvu d'un volet mobile destiné à venir obturer un espace situé en arrière de celui-ci, le volet mobile ne peut pas être horizontal dans les deux configurations du siège déployée ou escamotée.

On connait du brevet allemand DE 928 506 un siège de rang 2 possédant une tablette arrière qui se déplie vers l'arrière lorsque le siège est dans une position dans laquelle le dossier est rabattu sur l'assise. Cette tablette est en deux parties. Ces deux parties sont séparées par une liaison pivot. Une fois dépliée, la tablette vient s'attacher sur un plot. On note que la tablette montrée par ce document n'est pas opérationnelle lorsque le siège est en position déployée. On connaît du brevet US3011822 un siège de rang 2 comportant un volet mobile qui comprend une première partie, fixée sur la face dorsale du dossier selon une première liaison pivot d'axe transversal, et une deuxième partie reliée à la première partie par une deuxième liaison pivot d'axe transversal.

On connaît également du document DE 10 2008 025333 un volet qui possède une cinématique indépendante dotée des bras rigides qui sont distincts de la structure même du siège. Le volet est ainsi un élément indépendant du siège qui possède sa propre cinématique. Cela s'avère être un solution complexe et, de plus, encombrante car il convient de loger la cinématique indépendante du volet.

Dans ce contexte technique, un but de l'invention est de fournir un siège escamotable pourvu d'un plancher ou volet mobile qui offre une horizontalité substantielle du plancher mobile que le siège soit dans sa position déployée ou dans sa position escamotée tout en intégrant dans le siège même l'articulation du volet mobile .

Ainsi l'invention concerne un siège escamotable pour véhicule automobile comprenant une assise sur laquelle est articulé un dossier, le siège étant conçu pour occuper une position déployée dans laquelle le dossier forme avec l'assise un angle sensiblement perpendiculaire et une position escamotée dans laquelle le dossier est rabattu sur l'assise, le siège pouvant être positionné en avant d'un espace ménagé dans le plancher d'un véhicule automobile.

De plus, le siège comprend un volet mobile comprenant un étage proximal fixé sur la face dorsale du dossier selon une liaison pivot d'axe transversal A1 et un étage distal prolongeant le volet proximal avec une liaison pivot d'axe transversal A2 et le siège comprend de plus un organe de traction élastique de l'étage proximal contre le dossier dans une position haute orientée vers le haut du dossier et de maintien contre le dossier dans une position basse orientée vers le bas du dossier.

De façon concrète, le siège peut comprendre un ressort de traction dont une première extrémité est reliée à une première extrémité d'un câble, la seconde extrémité du ressort étant fixée sur le siège tandis que la seconde extrémité du câble est fixée à l'étage proximal du volet.

Selon l'architecture du siège, le siège comprend une patte de renvoi sur laquelle le câble est guidé.

Selon une disposition de l'invention, l'extrémité de la patte de renvoi et l'axe transversal de pivotement A1 sont compris dans un plan occupé par le volet perpendiculaire au plan du dossier de sorte que la traction sur le ressort soit maximale.

Dans une forme de réalisation de l'invention, le siège peut être pourvu d'un carter qui est fixé sur la partie inférieure du dossier, ce carter embarquant au moins une patte de renvoi et au moins une patte de fixation du ressort. Le carter peut ainsi être une pièce en matière plastique moulée qui embarque les fonctions de renvoi de câble et de fixation du ressort.

Par ailleurs, la seconde extrémité du câble reçoit une pastille qui est engagée dans une ouverture pratiquée dans l'étage proximal du volet.

Selon une disposition, le volet présente un amincissement transversal qui forme l'axe de pivotement A2 qui sépare l'étage proximal et l'étage distal.

Pour sa bonne compréhension, l'invention est décrite en référence au dessin ci annexé représentant, à titre d'exemple non limitatif, une forme de réalisation d'un siège selon celle-ci dans différentes positions de fonctionnement.

Figure 1 montre le siège en configuration déployée avec un volet étant en position repliée,

Figure 2 montre, en coupe et à une échelle agrandie, la zone du siège à l'intersection de l'assise et du dossier lorsque celui-ci est dans sa configuration illustrée à la figure 1,

Figure 3 montre le siège en configuration déployée avec un volet abaissé,

Figure 4 montre, en coupe et à une échelle agrandie, la zone d'intersection d'assise et du dossier du siège lorsque celui-ci est dans sa configuration illustrée à la figure 3.

Figure 5 montre le siège en configuration escamotée avec un volet en position repliée,

Figure 6 est une vue à une échelle agrandie et en coupe de la zone d'intersection du siège entre l'assise et le dossier lorsque le siège est dans sa configuration de la figure 5,

Figure 7 montre le siège en configuration escamotée, avec le volet qui passe dans une position intermédiaire entre sa position repliée et sa position abaissée,

Figure 8 montre en coupe et à une échelle agrandie la zone d'intersection du siège entre l'assise et le dossier, le siège étant dans sa configuration de la figure 7,

Figure 9 montre le siège en configuration escamotée avec le volet en position abaissée,

Figure 10 montre à une échelle agrandie et en coupe la zone d'intersection entre le dossier et l'assise lorsque le siège est dans sa configuration de la figure 9,

Figures 11 et 12 montrent le volet ainsi qu'un carter de fixation isolé du reste du siège,

Figures 13 à 16 représentent, en perspective de (trois quart) arrière, une forme de réalisation d'un siège dans ces différentes configurations.

Le siège 1 représenté sur les figures, présente une assise 2 et un dossier 3. Comme cela apparaît sur les figures, le siège peut comprendre une armature d'assise 4 qui reçoit un garnissage 5 de mousse ainsi qu'une armature de dossier 6 qui est également pourvue d'un garnissage de mousse 5, le dossier 3 étant doté de façon conventionnelle d'un appui tête 8.

Le siège, tel qu'il apparaît sur les figures, incorpore une cinématique permettant son escamotage. Pour cela, le siège présente une liaison pivot d'articulation P1 qui permet de relier le dossier 3 à l'assise 2.

De plus, le siège peut être équipé d'un piètement 11 comprenant un système de bielles 12 engagées dans des rails 14 sensiblement en parallélogramme déformable.

Il doit être précisé que la structure même du siège est ici donnée à titre d'exemple, car l'invention peut s'appliquer à un siège présentant des moyens d'escamotage autres que ceux qui sont indiqués sur les figures.

Le siège est, de plus, doté d'un volet qui porte la référence générale 15 qui est articulé sur la face postérieure du dossier 3. De façon plus précise, le volet 15 est articulé sur un carter 17 qui vient se fixer sur le siège en partie basse du dossier 3.

Comme on va le voir, le volet 15 possède des moyens d'articulation sur le dossier 3 originaux qui lui confèrent deux axes de rotation qui entrent en action de manière différenciée.

Le volet 15, comme cela apparaît sur les figures, possède deux sous ensembles, à savoir un étage proximal 18 qui est relié au siège par une articulation A1 transversale et un étage distal 19 est articulé sur l'étage proximal 18 par une articulation pivot transversale A2 qui est parallèle à l'articulation A1.

Le volet 15 peut être réalisé, par exemple, dans un feutre de matériau qui lui confère une rigidité suffisante puisque comme on le verra plus loin, le volet 15 peut être amené à supporter des charges.

L'articulation A2 peut être réalisée, par exemple, par un amincissement de la matière formant le volet 15 ce qui permet à l'étage distal 19 de pivoter par rapport à l'étage proximal 18.

Pour ce qui est de l'articulation A1, celle-ci peut être réalisée par des prolongements de matière qui viennent se fixer sur la face intérieure du carter 17 de sorte que l'arête supérieure du carter 17 forme l'articulation A1.

En variante d'autres formes de charnière peuvent être envisagées pour former les articulations en rotation A1 et A2

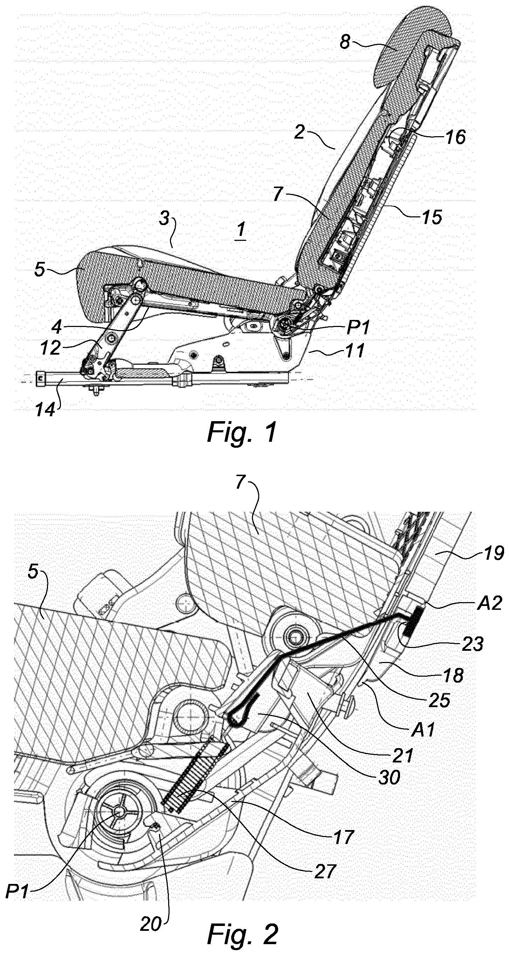

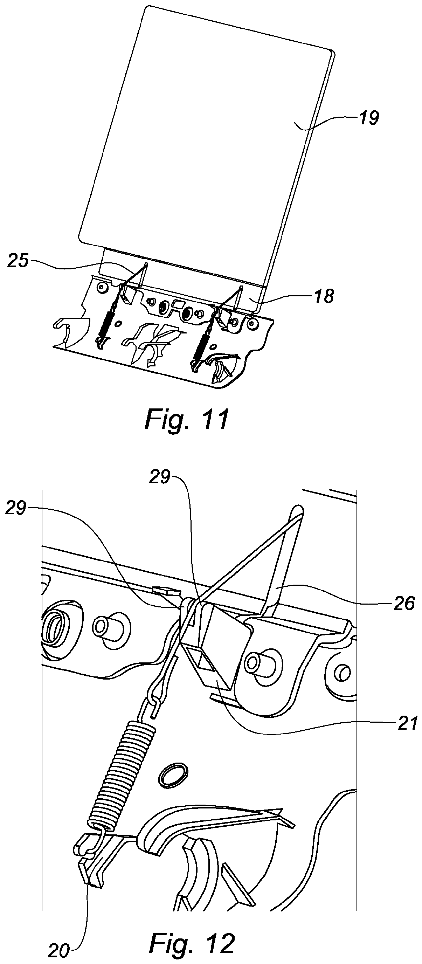

Le carter 17 peut être, par exemple, constitué par une pièce en matière moulée et, comme cela apparaît sur la figure 2 ou de manière plus claire sur les figures 11 et 12, peut comporter deux pattes de fixation 20 ainsi que deux pattes de renvoi 21. Ces pattes de fixation 20 et de renvoi 21 ont pour fonction de retenir et guider des organes de liaison du volet 15 et de manière plus précise de l'étage proximal 18 du volet 15.

Ainsi, il est prévu que l'étage proximal 18 du volet 15 soit doté de deux ouvertures en boutonnière 23 destinées à recevoir l'extrémité d'un câble 25. On note la présence de découpes 26 dans l'étage proximal 18 qui s'étendent entre depuis chaque boutonnières 26 vers l'articulation A1.

Ce câble 25 a un parcours qui va donc des boutonnières 23 ménagées dans l'étage proximal 18 à un ressort 27 de traction qui vient lui-même se fixer sur l'une des pattes de fixation 20 dont le carter 17 est pourvu. Sur son parcours, le câble 25 est guidé par la patte de renvoi 21 dont on peut voir, sur la figure 11, qu'elle est dotée de deux oreilles de guidage 29.

Un capot 30 peut être engagé sur chacune des pattes de renvoi 21 pour éviter que le câble 25 ne se dégage accidentellement de chacune de pattes de renvoi 21.

Lorsque le siège est dans sa configuration nominale et que le volet 15 est dans sa position repliée, on voit que le câble 25 exerce une action de traction qui lui est fournie par le ressort 27 sur l'étage proximal 18 du volet 15, tandis que l'étage distal 19 est pour sa part retenu sur la face postérieure du dossier 3 par les moyens de fixation deverouillables tels que, par exemple, des bandes de tissus à boucles crochets du type velcro ou un système de crochets pivotants par exemple.

Le fonctionnement du siège est le suivant.

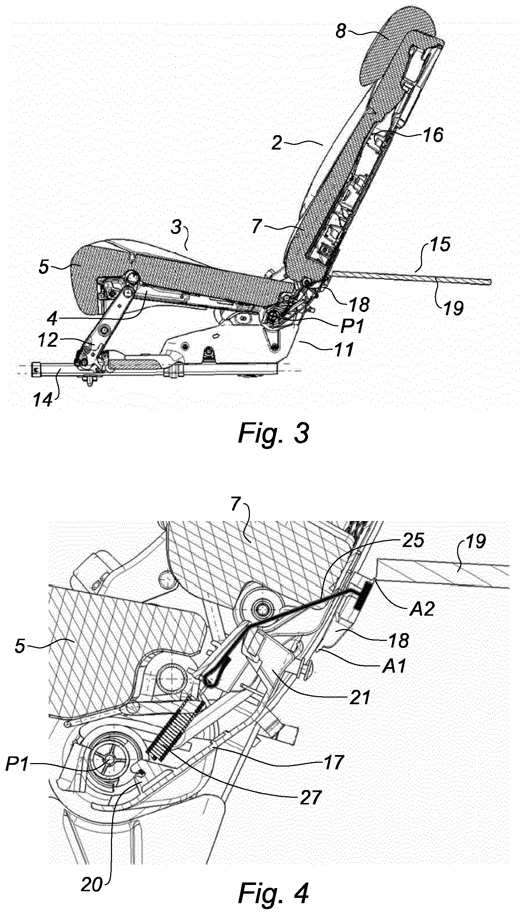

Lorsque le besoin se fait sentir de fermer l'espace qui se trouve en arrière du siège, l'étage distal 19 du volet 15 est libéré et peut donc pivoter naturellement autour de l'axe d'articulation A2 pour venir en appui contre un élément de structure du véhicule. Les figures 3 et 4 montrent le siège dans cette configuration.

L'élément de structure du véhicule peut être, par exemple, un épaulement pratiqué dans le contour du coffre du véhicule en question.

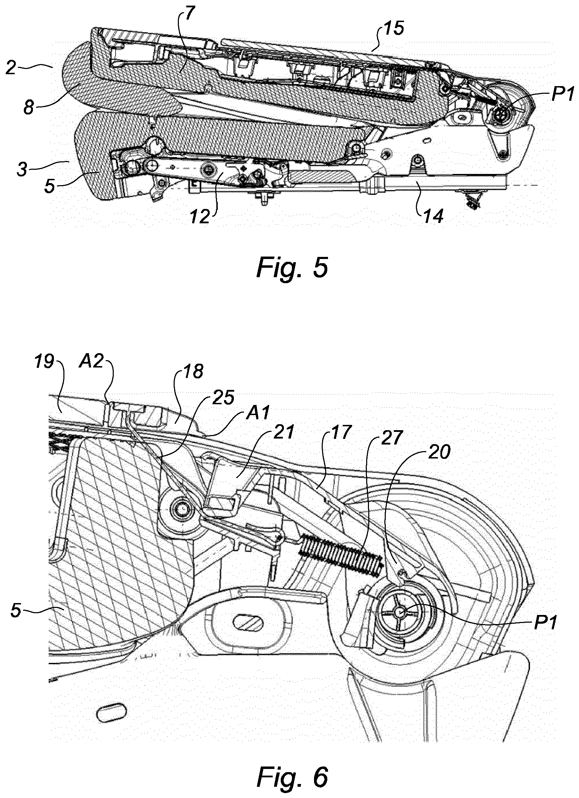

En se reportant aux figures 5 et 6, on peut voir le siège en position escamotée, c'est-à-dire une position dans laquelle le siège est replié dans une configuration dans laquelle le dossier 3 est rabattu contre l'assise 2 et dans le cas présent, le piètement est replié pour occuper un volume restreint.

Dans cette configuration du siège, le volet 15 est replié contre la face postérieure du dossier 3.

Lorsque le besoin se fait sentir d'obturer l'espace qui se situe en arrière du siège, un utilisateur se saisit du volet 15 arrière pour le faire pivoter sur une course angulaire d'environ 180°.

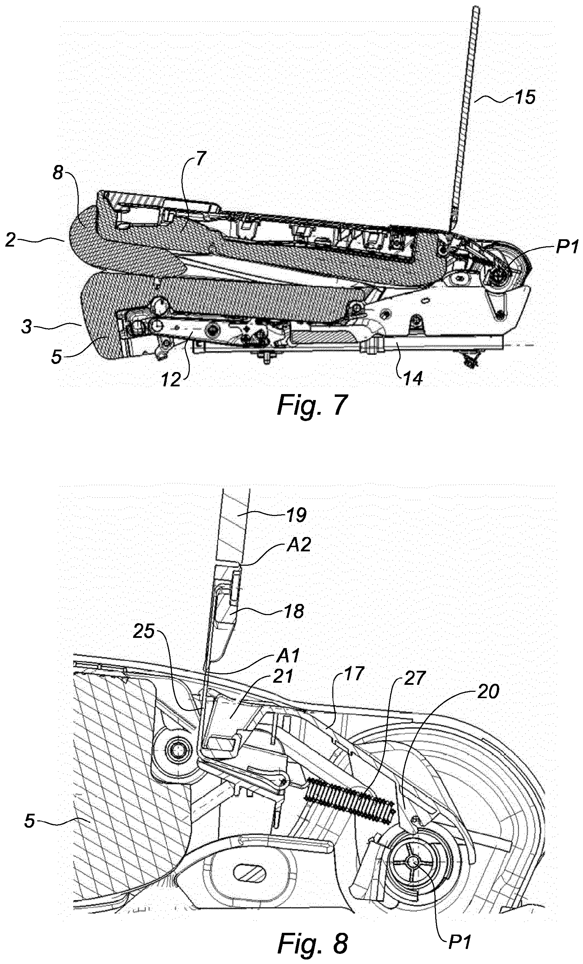

Au cours de cette rotation, l'utilisateur va passer par un point dur qui correspond à la position qui est illustrée aux figures 7 et 8.

La figure 7 montre, de manière claire, la position dans laquelle se trouve le volet 15 lorsqu'il est dans une position d'équilibre instable qui correspond sensiblement à un alignement de l'extrémité de la patte de renvoi 21, de l'axe de pivotement A1 et du point de traction du câble 25 sur l'étage proximal 18. Cette position correspond à une traction maximale du ressort 27.

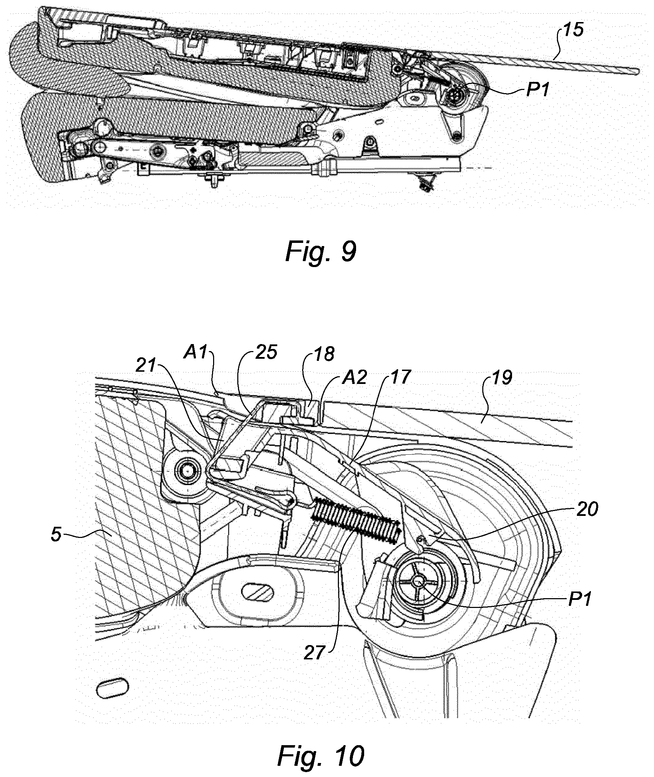

Lorsque l'utilisateur surmonte ce point dur, l'étage proximal 18 a tendance à basculer et à venir se plaquer contre le dossier 3 dans sa partie inférieure. Cette position est montrée à la figure 9 et à la figure 10 à une plus grande échelle.

Dans cette position, le ressort 27 de traction et le câble 25 maintiennent l'étage proximal 18 plaqué contre le dossier 3.

En comparant la figure, par exemple, 4 et, par exemple la figure 9, on constate que la trappe présente ainsi deux axes de pivotement A1 et A2 qui sont séparés d'une distance égale à la hauteur de l'étage proximal 18.

Ainsi, il est possible de conserver l'horizontalité de la trappe quelle que soit la configuration du dossier 3 car l'invention permet de faire varier le point d'attache du volet 15 au dossier 3.

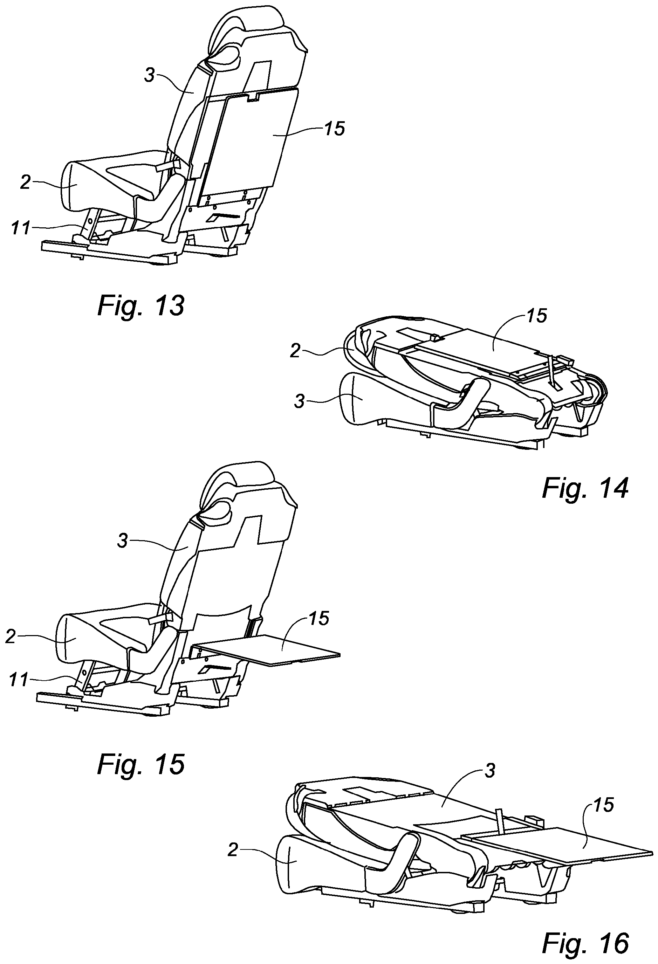

En effet, les figures 12 à 15 illustrent, à ce sujet, l'effet technique de l'invention. On peut en effet apprécier que le siège soit en position déployée (figure 15) avec un volet 15 qui a comme point d'attache l'articulation A2 ou en position escamotée (figure 16) avec un volet qui a comme point d'attache de l'articulation A1, le volet reste sensiblement horizontal. Cette faculté qu'a le siège selon l'invention de conserver l'horizontalité du volet qui lui est attaché ne se fait pas au détriment des fonctionnalités classiques, comme le montre les figures 13 et 14.

On peut voir, en effet aux figures 12 et 13, la trappe qui pivote par rapport à l'axe A2 tandis que les figures 14 et 15 montrent la trappe qui pivote par rapport à son axe A1.

Bien entendu, l'invention ne se limite pas aux formes de réalisation décrites ci-dessus, mais elle en embrasse au contraire toutes les variantes de réalisation.

## Revendications

1. Siège escamotable pour véhicule automobile comprenant une assise (2) sur laquelle est articulé un dossier (3) le siège étant conçu pour occuper une position déployée dans laquelle le dossier (3) forme avec l'assise (2) un angle sensiblement perpendiculaire et une position escamotée dans laquelle le dossier (3) est rabattu sur l'assise (2), le siège pouvant être positionné en avant d'un espace ménagé dans le plancher d'un véhicule automobile,
le siège comprenant de plus un volet (15) mobile comprenant un étage proximal (18) fixé sur la face dorsale du dossier (3) selon une première liaison pivot d'axe transversal A1 et un étage distal (19) prolongeant le volet (15) avec une deuxième liaison pivot d'axe transversal A2, **caractérisé en ce que** le siège comprend de plus un organe de traction élastique de l'étage proximal (18) contre le dossier (3) dans une position haute orientée vers le haut du dossier (3) et de maintien contre le dossier (3) dans une position basse orientée vers le bas du dossier (3).

2. Siège escamotable selon la revendication 1, **caractérisé en ce que** le siège comprend un organe de traction (27) dont une première extrémité est reliée à une première extrémité d'un câble (25), la seconde extrémité du ressort (27) étant fixée sur le siège tandis que la seconde extrémité du câble (25) est fixée à l'étage proximal (18) du volet (15).

3. Siège escamotable selon la revendication 2, **caractérisé en ce que** ledit organe de traction est un ressort.

4. Siège escamotable selon la revendication 2 ou la revendication 3, **caractérisé en ce que** le siège comprend une patte de renvoi (21) sur laquelle le câble (25) est guidé.

5. Siège escamotable selon la revendication 4, **caractérisé en ce que** l'extrémité de la patte de renvoi (21) et l'axe transversal de pivotement A1 sont compris dans un plan occupé par le volet (15) perpendiculaire au plan du dossier (3) da sorte que la traction sur l'organe de traction (27) soit maximale.

6. Siège escamotable selon l'une des revendications 4 à 5, **caractérisé en ce que** le siège est pourvu d'un carter (17) qui est fixé sur la partie inférieure du dossier (3), ce carter (17) embarquant au moins une patte de renvoi (21) et au moins une patte de fixation (20) de l'organe de traction (27).

7. Siège escamotable selon l'une des revendications 3 à 5 **caractérisé en ce que** la seconde extrémité du câble (25) reçoit une pastille qui est engagée dans une ouverture pratiquée dans l'étage proximal (18) du volet (15).

8. Siège escamotable selon l'une des revendications 1 à 6, **caractérisé en ce que** le volet (15) présente un amincissement transversal qui forme l'axe de pivotement A2 qui sépare l'étage proximal (18) et l'étage distal.

## Patentansprüche

1. Versenkbarer Sitz für ein Kraftfahrzeug mit einer Sitzfläche (2), an der eine Rückenlehne (3) angelenkt ist, wobei die Sitzlehne (3) in einer ausgefahrenen Stellung mit der Sitzfläche (2) einen im Wesentlichen senkrechten Winkel und eine eingeklappte Stellung einnimmt, in der die Rückenlehne (3) auf der Sitzfläche (2) umgebogen ist, wobei der Sitz vor einem Raum im Boden eines Kraftfahrzeugs positioniert werden kann , die
Der Sitz umfasst ferner eine bewegliche Klappe (15) mit einer proximalen Stufe (18), die an der Rückseite der Rückenlehne (3) gemäß einer ersten Querachsenschwenkverbindung A1 und einer Stufe (19) befestigt ist, die die Klappe (15) mit einer zweiten Querachsenschwenkverbindung A2 verlängert, **dadurch gekennzeichnet , dass** der Sitz ferner ein elastisches Zugorgan der proximalen Stufe (18) gegen die Rückenlehne (3) in einer nach oben weisenden Position der Rückenlehne (3) und zur Halterung gegen die Rückenlehne (3) in einer nach unten weisenden Position der Rückenlehne (3).

2. Einziehbarer Sitz nach Anspruch 1, **dadurch gekennzeichnet, dass** der Sitz ein Zugglied (27) aufweist, dessen erstes Ende mit einem ersten Ende eines Kabels (25) verbunden ist, wobei das zweite Ende der Feder (27) an dem Sitz befestigt ist, während das zweite Ende des Kabels (25) an der proximalen Stufe (18) der Klappe (15) befestigt ist.

3. Einziehbarer Sitz nach Anspruch 2, **dadurch gekennzeichnet, dass** das Zugglied eine Feder ist

4. Einziehbarer Sitz nach Anspruch 2 oder 3, **dadurch gekennzeichnet, dass** der Sitz eine Umlenklasche (21) umfasst, an der das Kabel (25) geführt ist.

5. Einziehbarer Sitz nach Anspruch 4, **dadurch gekennzeichnet, dass** das Ende der Umlenklasche (21) und die Schwenkquerachse A1 in einer Ebene liegen, die von der Klappe (15) senkrecht zur Ebene der Rückenlehne (3) derart eingenommen wird, dass der Zug am Zugorgan (27) maximal ist.

6. Versenkbarer Sitz nach einem der Ansprüche 4 bis 5, **dadurch gekennzeichnet, dass** der Sitz mit einem am unteren Teil der Rückenlehne (3) befestigten Gehäuse (17) versehen ist, das mindestens eine Umlenklasche (21) und mindestens eine Befestigungslasche (20) des Zugorgans (27) einträgt.

7. Einziehbarer Sitz nach einem der Ansprüche 3 bis 5, **dadurch gekennzeichnet, dass** das zweite Ende des Kabels (25) eine Tablette aufnimmt, die in eine Öffnung in der proximalen Stufe (18) der Klappe (15) eingreift.

8. Versenkbarer Sitz nach einem der Ansprüche 1 bis 6, **dadurch gekennzeichnet, dass** die Klappe (15) eine Querverjüngung aufweist, die die die proximale Stufe (18) und die distale Stufe trennende Schwenkachse A2 bildet.

## Claims

1. Retractable seat for a motor vehicle comprising a seat (2) on which a back is articulated (3) the seat being designed to occupy a deployed position in which the seat back (3) forms with the seat (2) a substantially perpendicular angle and a retractable position in which the seat back (3) is folded on the seat (2), the seat being able to be positioned forward of a space in the floor of a seat motor vehicle,
the seat also includes a mobile flap (15) consisting of a proximal floor (18) fixed on the back side of the back (3) according to a first transverse axis pivotal link A1 and a distal floor (19) extending the flap (15) with a second transverse axis pivot link A2, characterized as the seat also includes an elastic traction organ of the proximal floor(18) against the record (3) in a high position facing the top of the record (3) and maintaining the record (3) in a low position facing the bottom of the record (3).

2. Retractable seat according to claim 1, characterized as the seat consists of a tensile component (27), the first end of which is connected to the first end of a cable (25), the second end of the spring (27) being fixed to the seat, and the second end of the cable (25) is fixed to the proximal floor (18) of the flap (15).

3. Retractable seat according to Claim 2, characterized as the said traction organ is a spring.

4. Retractable seat according to Claim 2 or Claim 3, characterized as the seat includes a reference leg (21) on which the cable (25) is guided.

5. Retractable seat according to Claim 4, characterized as the end of the return leg (21) and the transverse axis of swivel A1 are included in a plane occupied by the strap (15) perpendicular to the plane of the back (3) so that the traction on the traction organ (27) is maximum.

6. Retractable seat in accordance with one of the claims 4 to 5, **characterized by** the fact that the seat is equipped with a crankcase (17) which is fixed on the lower part of the file (3), that crankcase (17) embodying at least one return leg (21) and at least one attachment leg (20) of the traction unit (27).

7. Retractable seat according to one of the claims 3 to 5 **characterized in that** the second end of the cable (25) receives a pastille which is engaged in an opening in the proximal floor (18) of the strand (15).

8. Retractable seat according to one of the claims 1 to 6, **characterized by** the transverse thinning of the strap (15) which forms the A2 pivot axis between the proximal floor (18) and the distal stage.
